# EUROPÄISCHE PATENTSCHRIFT

(11) **EP 1 085 988 B1**
(45) Veröffentlichungstag und Bekanntmachung des Hinweises auf die Patenterteilung: **24.07.2002**
(21) Anmeldenummer: 99926476.5
(22) Anmeldetag: 29.05.1999
(51) Int. Cl.: B60B 7/06, B60B 7/08, B60B 7/00

(54) **ABDECKUNG VON FAHRZEUGRÄDERN MIT LEICHTMETALLFELGEN WÄHREND EINES LÄNGEREN TRANSPORTES**
COVERING OF VEHICLE TYRES WITH LIGHT-ALLOY RIMS DURING PROLONGED TRANSPORTATION
PROTECTION DES ROUES DE VEHICULE EQUIPEES DE JANTES EN METAL LEGER PENDANT UN TRANSPORT PROLONGE

(30) Priorität: 09.06.1998 DE 29810270 U
(43) Veröffentlichungstag der Anmeldung: 28.03.2001
(73) Patentinhaber: DaimlerChrysler AG, 70567 Stuttgart (DE)
(72) Erfinder: PASSOTH, Half, D-72181 Starzach (DE); HAGNER, Hans, D-72280 Dornstetten (DE)
(86) Internationale Anmeldenummer: EP9903738
(87) Internationale Veröffentlichungsnummer: WO9964255

(56) Entgegenhaltungen:
- EP-A- 0 310 777
- DE-C- 19 634 508
- DE-U- 29 710 223
- GB-A- 2 229 975
- GB-A- 2 291 017
- US-A- 5 039 172
- US-A- 5 423 599

## Beschreibung

Die Erfindung geht aus von einer Abdeckung von Fahrzeugrädern mit Leichtmetallfelgen während eines längeren Transportes, nach dem Oberbegriff von Anspruch 1, wie sie beispielsweise aus der DE 297 10 223 U1 bekannt ist.

Leichtmetallfelgen benötigen wegen ihrer größeren Durchlässigkeit im Vergleich zu radkappanüberdeckten Stahlfelgen eine gesonderte Transportabdeckung zum Schutz der Bremsscheibe gegen außenseitige Anrostungen auf längeren Transporten. Leichtmetallfelgen enthalten im übrigen üblicherweise eine mittige Zentrierbohrung, die zumindest bei allen für eine Erstausstattung vorgesehenen Felgentypen eines Fahrzeugherstellers gleich ausgebildet ist. Die außenseitige Öffnung dieser Zentrierbohrung ist beim Fahrzeug in Kundenhand durch einen eingeklipsten Deckel verschlossen, der das Firmenemblem des Fahrzeugherstellers trägt. Während des Transportes werden diese eingeklipsten Deckel entnommen und dem Fahrzeug im Fahrzeuginneren beigegeben.

Bei einer aus der DE 196 34 508 C1 bekannten Radabdeckung der angesprochenen Art wird das Fahrzeugrad mit einem geschlossenen Folienformkörper abgedeckt und mittels Befestigungsnoppen, die an den Radschrauben/-muttern bzw. den entsprechenden Ansenkungen kraftschlüssig eingreifen, zentrisch am Fahrzeugrad befestigt. Zwar ist damit eine einfache manuelle und rasche Montage oder Demontage der Abdeckung möglich, jedoch kommt nicht in jedem der vielen tausend Fälle ein sicherer Halt der Abdeckung am Fahrzeugrad zustande, so daß sich während des Fahrens und/oder bei starkem Seitenwind die Abdeckungen in Einzelfällen vom Rad lösen kann. Es ist in diesem Zusammenhang auch daran zu denken, daß in Einzelfällen die Radabdeckung zur Überprüfung und/oder Erhöhung des Reifenluftdruckes abgenommen werden muß. Eine einmal abgefallene oder bewußt abgenommene Abdeckung nach dem Stand der Technik wird sich nicht so ohne weiteres sicher am Fahrzeugrad befestigen lassen, weil die Noppen des Folienformkörpers beim erstmaligen Aufsetzen häufig bereits bleibend deformiert werden und nach einem zweiten Anbringen der Abdeckung an einem Fahrzeugrad nicht mehr den sicheren Kraftschluß zu den Schraubenkopf-Ansenkungen vermitteln, wie er an sich nötig wäre. Zur sicheren Befestigung eines zum zweiten mal angebrachten Folienformkörpers nach dem Stand der Technik bedarf es zusätzlicher Hilfsmittel, wie z.B. Klebestreifen oder dgl., was jedoch umständlich und zeitraubend ist.

Bei der Radabdeckung nach der eingangs genannten DE 297 10 223 U1 weist der Folienformkörper in seinem Zentrum einen im Durchmesser der Zentrierbohrung entsprechenden zylindrischen Haltestutzen auf, der in die Zentrierbohrung unter Vorspannung hineingesteckt ist. Eine sich in Umfangsrichtung erstreckende Reihe von Rastnasen am Umfang des Haltestutzens bildet einen Formschluß mit der Felgennabe. Der radial zwischen dem Radschraubenkranz und dem Felgenhorn liegende Schirmteil der bekannten Radabdeckung ist nahezu eben und durch mehrere radial verlaufende Versteifungssicken ausgesteift. Um die am Fahrzeugrad befestigte Radabdeckung bei Bedarf vom Rad wieder lösen zu können, ist bei einer der Versteifungssicken beiderseits je eine Greifmulde in den Folienformkörper eingeformt. Die bekannte Radabdeckung kann also nur durch Zug an einer exzentrisch liegenden Stelle und unter erheblichen Deformationen des Übergangsbereiches vom Schirmteil in den Haltestutzen vom Rad gelöst werden. Die Gefahr von Einrissen und bleibenden Verformungen in dem Folienformkörper ist dabei sehr groß, so daß er u.U. nicht erneut wiederverwendet werden kann. Wenn ein solches vorübergehendes Abnehmen der bekannten Radabdeckung - beispielsweise wegen eines Verlustes an Luftdruck im Reifen - während eines Transportes notwendig und sie dabei beschädigt werden sollte, so ist die Bremsscheibe des Betreffenden Rades für den Rest des Transportes ungeschützt. Eine sichere Wiederverwendbarkeit der Radabdeckung ist also funktionsnotwendig.

Die US 5 039 172 A zeigt ebenfalls eine Transportschutzabdekkung für Leichtmetallfelgen von Fahrzeugen, die aus einer Kunststoffolie gebildet ist. Im zentrumsnahen Bereich der Radabdeckung und am Außenrand erstreckt sich die Folie jeweils eben und ist dort auf der radzugewandten Seite mit einem doppelseitig klebenden, ringförmig verlaufenden Haftklebestreifen versehen. In dem radial zwischen dem Zentrum und dem Außenrand liegenden Abdeckteil hat die Radabdeckung aufgrund mehrerer konzentrisch ineinander liegender Ringsicken einen stark gewellt verlaufenden Querschnitt, wobei in entspanntem Zustand der Radabdeckung der wellenförmige Verlauf sich symmetrisch dies- und jenseits der einheitlichen Ebene des Zentrumsteils und des Randteils erstreckt. Ziel dieser gewellten Querschnittsgestaltung der Radabdeckung ist es, daß sich die ebene Zentrumspartie relativ zu der ebenfalls ebenen Randpartie der Radabdeckung ohne großen Kraftaufwand axial elastisch verschieben und an die Felge anpassen läßt. Voraussetzung für den Einsatz der hier behandelten Radabdeckung ist, daß nicht nur die Zentrierbohrung einen ebenen Rand, sondern auch das Felgenhorn eine ringförmig verlaufende, ebenfalls ebene Fläche jeweils von einer gewissen Mindestbreite aufweist. Derartige plane Flächen von einer gewissen Mindestbreite sind aus gestalterischer Sicht jedoch unschön und vom Kunden daher nicht akzeptiert. Deshalb sind in der Regel nur mehr oder weniger stark gewölbte Flächen an der Felge vorhanden, die aufgrund ihrer Wölbung für den im Klebebereich eigensteifen Folienformkörper nur ralativ schmale Klebeflächen bieten und die Radabdeckung somit nur mit geringen Kräften festhalten können. Abgesehen davon unterliegen Haftkleber einer Kriechneigung, wenn sie - wie vorliegend aufgrund der axial elastischen Verformung der zunächst im wesentlichen ebenen Radabdeckung gegeben - einer andauernden Krafteinwirkung unterliegen. Deshalb kann es sein, daß sich die Klebestelle der Radabdeckung im zentrumsnahen Bereich mit der Zeit selbsttätig von der Felge löst. Ein weiterer Nachteil von Haftklebern besteht darin, daß sie im allgemeinen unter der Einwirkung von Sonnenlicht verspröden und ihre Haftkraft verlieren. Bei Zugabe von einem Verspröden entgegen wirkenden Weichmachern zu dem Haftkleber besteht die Gefahr, daß nach dem Abnehmen der Radabdeckung Kleberreste an der Radfelge zurückbleiben. Diese müßten unter Einsatz von Lösemittel umständlich manuell beseitigt werden. Auf diese Problematik weist bereits die weiter oben gewürdigte DE 196 34 508 C1 im Zusammenhang mit einer dort geschilderten Abdeckung der Felge durch eine selbstklebende Folie hin. Die bekannte, an die Felge anzuklebende Transportschutzabdeckung hat - abgesehen von dem Kostennachteil der Haftklebestreifen und deren Anbringung - also viele anwendungstechnische Nachteile, weshalb sie der Fachmann nicht als vorteilhaft in Betracht ziehen wird.

Die in der EP 310 777 A1 gezeigte Kappe für Leichtmetallfelgen ist dort zwar auch als Radabdeckung bezeichnet, sie stellt jedoch keine Transportabdeckung im Sinne der vorliegenden Erfindung dar. Vielmehr handelt es sich bei der bekannten Kappe um eine während des normalen Fahrzeuggebrauches am Fahrzeugrad angebrachte Zierkappe, die den zentrumsnahen Bereich der Leichtmetallfelgen bis in den Bereich der Radbefestigungsschrauben glattflächig und in ästhetisch gefälliger Weise überdecken soll. Nachdem die bekannte Zierkappe sich radial nur bis zu den Radbefestigungsschrauben erstreckt, kann sie die Funktion des hier in Rede stehenden Transportschutzes gar nicht übernehmen. Die bekannte Zierkappe ist im übrigen als Spritzgußteil und nicht als ein im thermischen Tiefziehverfahren kostengünstig herstellbarer Folienformkörper ausgebildet. Zur Befestigung der Zierkappe an der Leichtmetallfelge weist die Zierkappe auf der radzugewandten Seite mehrere axial abragende, radial nachgiebige Zungen auf, die axial in die Zentrierbohrung der Felge hineinreichen und unter Vorspannung an der Bohrungsleibung anliegen. An den freien Enden der elastischen Zungen sind außenseitig im Querschnitt dreieckige Wülste angeformt, die in eine im Querschnitt trapezförmige Umfangsrille in der Leibung der Zentrierbohrung eingreifen und so die Zierkappe axial formschlüssig an der Leichtmetallfelge sichern. Zur einfachen Demontage der Zierkappe - beispielsweise im Fall eines notwendigen Radwechsels - sind am Außenrand der Zierkappe einerseits und am Rand der die Zierkappe aufnehmenden Ansenkung in der Leichtmetallfelge andererseits einander entsprechende Abweisnocken angeformt. Durch eine Verdrehung der Zierkappe können die Abweisnocken gegenseitig in Eingriff gebracht und so eine vom Rad weg gerichtete Axialkraft aufgebaut werden, durch welche die Zierkappe axial aus dem genannten Formschluß gelöst werden kann.

Die GB 2 291 017 A zeigt ebenfalls eine Radzierkappe, die jedoch in dem hier behandelten Fall aufgrund bestimmter Gegebenheiten sinnvoll nur bei Stahlfelgen zum Einsatz kommen kann. Üblicherweise überdecken die Radzierkappen von Stahlfelgen letztere bis in den Bereich des Felgenhorns und sind am Außenumfang mit der Felge elastisch verklammert. Die in der hier behandelten Druckschrift gezeigte Radzierkappe ist jedoch aus gestalterischen Gründen im Außenbereich unrund ausgebildet und erstreckt sich radial auch gar nicht bis in den Bereich des Felgenhorns. Weil dadurch die übliche Außenverklammerung der Radzierkappe ausscheidet, sind in der hier behandelten Druckschrift besondere Vorkehrungen für eine zentrumsnahe Fixierung der Radzierkappe gezeigt. Und zwar ragen vom Rand der Zentrierbohrung der Stahlfelge axial vier Stahlzungen zur Radaußenseite ab, die gemeinsam einen vierfach längsgeschlitzten Zylinder bilden und die jeweils an ihrem freien Ende sowohl radial nach außen als auch radial nach innen in der Wanddicke verstärkt sind und so Halteansätze aufweisen. Im Zentrum der als Spritzgußteil ausgebildeten, aus Kunststoff bestehenden Radzierkappe ist eine im wesentlichen zylindrische Öffnung angeformt, deren Leibung vier flache Umfangsnischen enthält, die den vier radseitigen Stahlzungen formnegativ entsprechen. Die bekannte Radzierkappe läßt sich also auf die radseitigen Stahlzungen axial aufstecken. Sie ist dadurch am Fahrzeugrad zentriert und verdrehfest gesichert. Die radial äußeren Halteansätze an den Enden der Stahlzungen hintergreifen zwar den Rand der kappenseitigen Öffnung teilweise, können aber eine ausreichende Sicherheit gegen axiales Abrutschen durch Fahrerschütterungen nicht bieten. Zur Verbesserung der axialen Fixierung der bekannten Radzierkappe und zur Abdeckung der verbleibenden Öffnung ist ein Zierdeckel vorgesehen, der - ähnlich wie ein Renkverscbluß am Einfüllstutzen eines Kraftstofftanks - durch eine axiale Einführbewegung und eine anschließende Drehbewegung an den vier Stahlzungen und deren innenseitigen Halteansätzen fixiert werden kann. Zur Handhabung des Zierdeckels ist dieser - ebenfalls wie bei einem Tankverschlußdeckel - auf der frei liegenden Außenseite mit zwei durch einen diametral verlaufenden Wulst getrennte Greifmulden versehen.

Die GB 2 229 975 A zeigt ein Rad in Einfachausführung für den Einsatz an Puppenwagen, Kinderwagen, Einkaufswagen, Bürostühlen o.dgl. Das Rad einschließlich des Radreifens besteht aus mehreren Rundteilen aus Kunststoff, die axial zusammen gesteckt und dabei aufgrund elastischer Haltenasen und Rastvertiefungen dauerhaft miteinander verklipst werden können. Die auf der Radaußenseite liegende Abschlußscheibe des Einfachrades ist integraler und tragender Bestandteil desselben. Mit Rücksicht auf die Billigausführung der Einfachräder ist eine Demontierbarkeit der Einzelteile des Rades nicht vorgesehen.

Aufgabe der Erfindung ist es, die gattungsgemäß zugrundegelegte Felgenabdeckung dahingehend zu verbessern, daß sie mit größerer Ausfallsicherheit am Fahrzeugrad haftet und auch nach einer vorübergehenden Demontage sich ebenso sicher erneut am Rad anbringen läßt und dort wie ursprünglich sicher haftet, daß die Radabdeckung also nach Gebrauch ohne weiteres wiederverwendbar ist.

Ausgehend von der gattungsgemäß zugrundegelegten Radabdeckung wird diese Aufgabe erfindungsgemäß durch die kennzeichnenden Merkmale von Anspruch 1 gelöst. Danach wird zur zentrischen Befestigung des Folienformkörpers eine in der Leibung einer radseitigen Zentrierbohrung vorhandenen Umfangsrille ausgenutzt. Aufgrund der am Umfang des Haltestutzens angeformter, axial verlaufender Rillen kann der Haltestutzen beim axialen Einstecken in die zentrierbohrung oder auch beim Herausziehen radial elastisch nachgeben, wodurch die Applikation der Radabdeckung oder das Abnehmen wesentlich erleichtert und eine auch nur leichte Schädigung der Rastnasen oder des Haltestutzens vermieden wird. Zur Begünstigung einer radialen Nachgibigkeit des Haltestutzen trägt auch die bewußt geringe Dimensionierung des endseitigen Versteifungsflaches bei, wobei jedoch endseitig eine höhere radiale Steifigkeit als an dem axial der Basis des Haltestutzen zu gelegenen Bereich erzielt ist. Die aus Gründen einer leichten Demontierbarkeit und zwecks Anpassungsfähigkeit an unterschiedliche Felgendesigns erwünschte hohe Nachgiebigkeit im Schirmteil der Radabdeckung ist gepaart mit einer elastischen Vorspannung, die einen sicheren Halt an der Felge gewährleistet. Dies wird durch die einerseits in sich gewellte und zum anderen als ganzes gewölbte Querschnittsform des Schirmteiles mit dem konischen Übergang in den Haltestutzen erreicht.

Zweckmäßige Ausgestaltungen der Erfindung können den Unteransprüchen entnommen werden; im übrigen ist die Erfindung anhand eines in der Zeichnung dargestellten Ausführungsbeispieles nachfolgend noch erläutert; dabei zeigen:
Fig. 1 einen Querschnitt durch ein Fahrzeugrad mit Leichtmetallfelge und mit Scheibenbremse aber ohne außenseitige Radabdeckung,

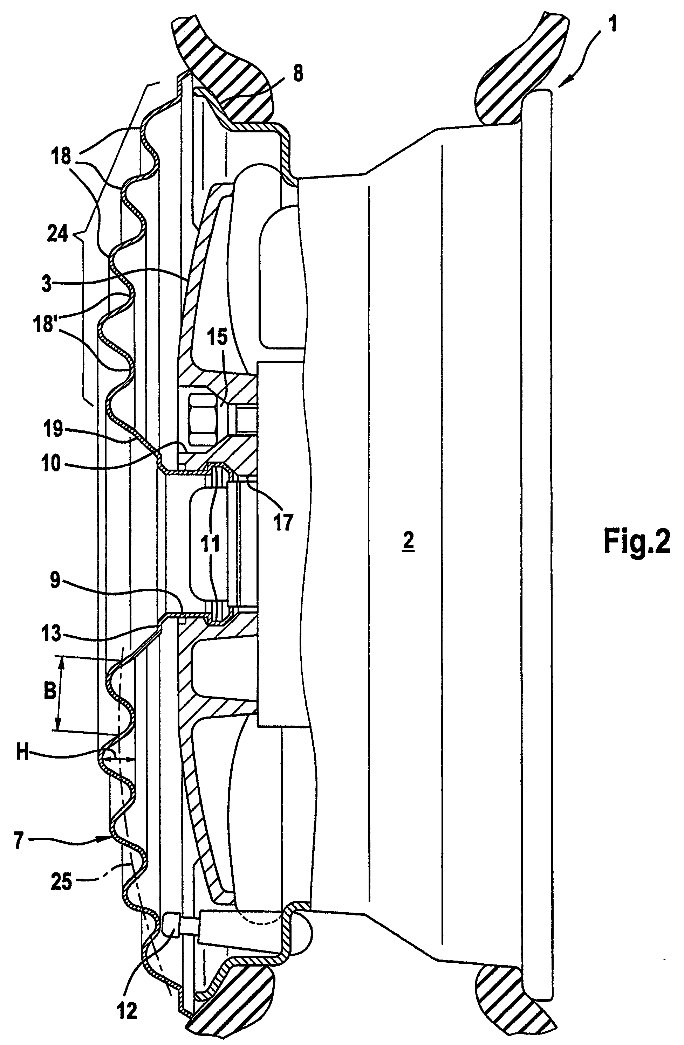

Fig. 2 einen partiellen Querschnitt durch das Fahrzeugrad nach Figur 1 mit einer Radabdeckung durch einen eigensteifen Folienformkörper,
Fig. 3 eine vergrößerte Einzeldarstellung des zentrischen, zylindrischen Haltestutzens des Folienformkörpers nach Figur 2,
Fig. 4 einen achssenkrechten Querschnitt durch den Haltestutzen nach Figur 3 gemäß der dortigen Schnittlinie IV-IV und
Fig. 5 den zylindrischen Haltestutzen nach Figur 3 und die radseitige Zentriebohrung in einer koaxialen Relativstellung vor dem zentrischen Anbringen der Radabdeckung an dem Fahrzeugrad.

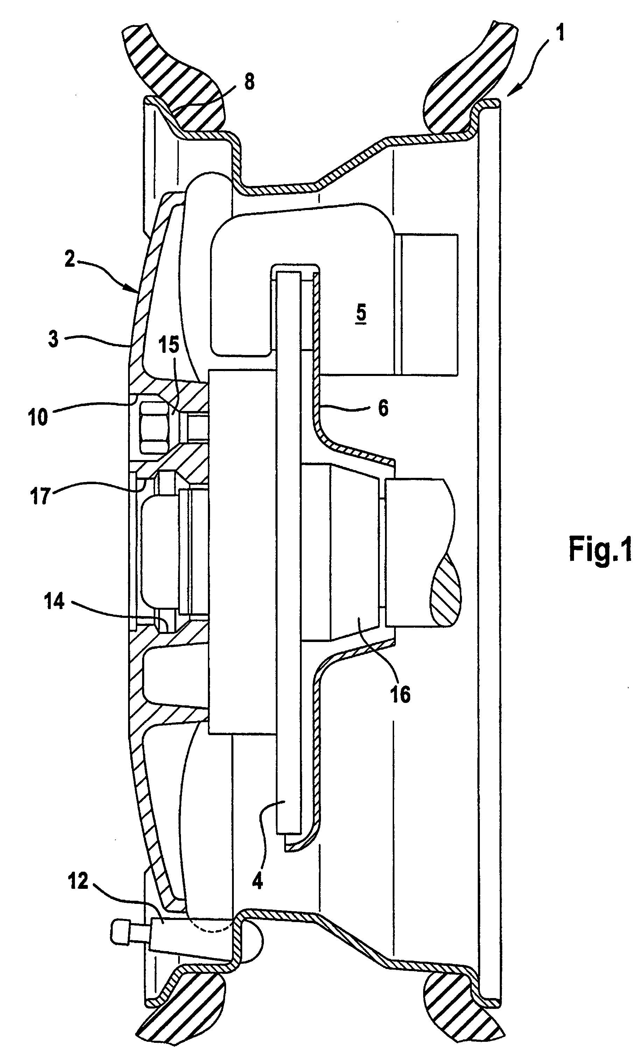

Das in Figur 1 im Querschnitt partiell dargestellte Fahrzeugrad 1 weist eine Leichtmetallfelge 2 auf, die außen mit einem teilweise gezeigten Reifen bestückt ist, dessen Reifenwülste an den Felgenhörnern 8 anliegen. An einer Umfangsstelle der Felge ist ein Füllventil 12 angebracht, welches geringfügig die Außenseite 3 des Rades überragt. Die Felge 2 ist mittels Radschrauben 15 an einem hier nicht erkennbaren Flansch der drehbar gelagerten Radnabe 16 angeschraubt. Die Köpfe der Radschrauben liegen außenseitig vertieft in einer zylindrischen Ansenkung 10 des Radkörpers. An dem erwähnten Radnabenflansch ist auch - mittels anderer Schrauben - die mit dem Rad 1 umlaufende, hutförmige Bremsscheibe 4 befestigt, so daß der Radnabenflansch im Inneren des hutförmigen Nabenbereiches der Bremsscheibe zu liegen kommt und von ihr überdeckt ist. An einer Umfangsstelle der Bremsscheibe 4 - meist oben - ist der ortsfest gehalten Bremssattel 5 mit den Bremsklötzen und dem Anpreßkolben dafür in der Weise angeordnet, daß der Bremssattel alle einfederungsbedingten Radbewegungen mitvollführt und in konstanter Relativlage zum Rad gehalten wird. Auf der radabgewandten, d.h. zur Fahrzeugmitte hin weisenden Innenseite der Bremsscheibe ist eine Spritzschutzscheibe 6 gleichfalls in konstanter Relativlage zur Bremsscheib 4 gehalten, die diese außerhalb des Bremssattels in dichtem Abstand übergreift und sie vor Schwallwasser, Schmutzoder Schneematschspritzern seitens des gegenüberliegenden Fahrzeugrades schützt. Diese Spritzschutzscheibe 6 schützt die Innenseite der Bremsscheibe natürlich auch auf Übeseetransporten vor dem ungehinderten Zutritt von salzhaltiger Luft und somit vor Korrossion auf dieser Seite.

Um auch die nach außen weisende Seite der Bremsscheibe gegen eine Bewetterung durch salzhaltige Luft auf längeren Transporten wirksam zu schützen, ist während des Transportes die nach außen weisende Seite 3 des Fahrzeugrades 1 mit einem geschlossenen, am Rad befestigten eigensteifen Folienformkörper 7 überdeckt. Diese Abdeckung soll bei gleicher Ausführung für unterschiedliche Felgendesigns leicht anbringbar und auch wieder lösbar und erneut anbringbar sein, trotzdem aber in jedem Fall einen sicheren Halt am Fahrzeugrad bieten.

Zu diesem Zweck wird erfindungsgemäß die im Radzentrum angebrachte Zentrierbohrung 17 des Fahrzeugrades 1 ausgenutzt, die sich bis zur Radaußenseite 3 hin erstreckt und die an ihrer Leibung mit einer Umfangsrille 14 versehen ist. Der Folienformkörper 7 weist dementsprechend in seinem Zentrum einen zylindrischen Haltestutzen 9 auf, der sich axial zum Fahrzeugrad hin erstreckt. Er entspricht im Durchmesser der Zentrierbohrung 17, in die er unter Vorspannung hineinragt. Der im Ausführungsbeispiel gezeigte Haltestutzen 9 weist an seinem Umfang eine sich in Umfangsrichtung erstreckende Reihe von Rastnasen 11 auf, welche nach Axiallage und Querschnittsform der radseitigen Umfangsrille 14 entsprechen oder sich zumindest innerhalb ihres Lichtraumprofiles halten. Mit diesen Rastnasen ist der Haltestutzen 9 und mit ihm der ganze Folienformkörper 7 formschlüssig in der Umfangsrille der Zentrierbohrung gesichert. Die radiale Höhe der Rastnasen beträgt etwa das 8- bis 12-fache der Folienwandstärke, was wegen der übertriebe stark gezeichneten Folienstärke nicht maßstäblich dargestellt ist.

Zum Einführen des Haltestutzens in die Zentrierbohrung muß dieser um das Radialmaß der Rastnasen radial nach innen nachgeben. Im eingesteckten Zustand liegt er aber bereits unter leichter Vorspannung an der Leibung der Zentrierbohrung an, um so den Folienformkörper spielfrei an der Felge zentrieren zu können. Damit der Haltestutzen ohne unkontrolliert nach innen einzubeulen in die Zentrierbohrung axial eingeführt werden kann, sind am Umfang des Haltestutzens mehrere gleichmäßig verteilte, axial verlaufende Rillen 20 angeformt. Aufgrund dieser Rillen kann der Haltestutzen beim axialen Einstecken in die Zentrierbohrung oder auch beim Herausziehen radial elastisch nachgeben, wodurch die Applikation der Radabdeckung oder das Abnehmen wesentlich erleichtert und eine auch nur leichte Schädigung der Rastnasen oder des Haltestutzens vermieden wird. Aufgrund der Rillen 20, die radial nach Außen oder radial nach innen gewölbt sein können und die in einer doppelt so großen Anzahl wie die der Rastnasen vorgesehen sind, kann der Haltestutzen im Bereich einer jeden Rastnase zumindest auf der vom Versteifungsflansch 21 axial abgewandten Seite lokal nach innen nachgeben. Aufgrund dessen können die Rastnasen leichter in die Zentrierbohrung eingeschoben werden.

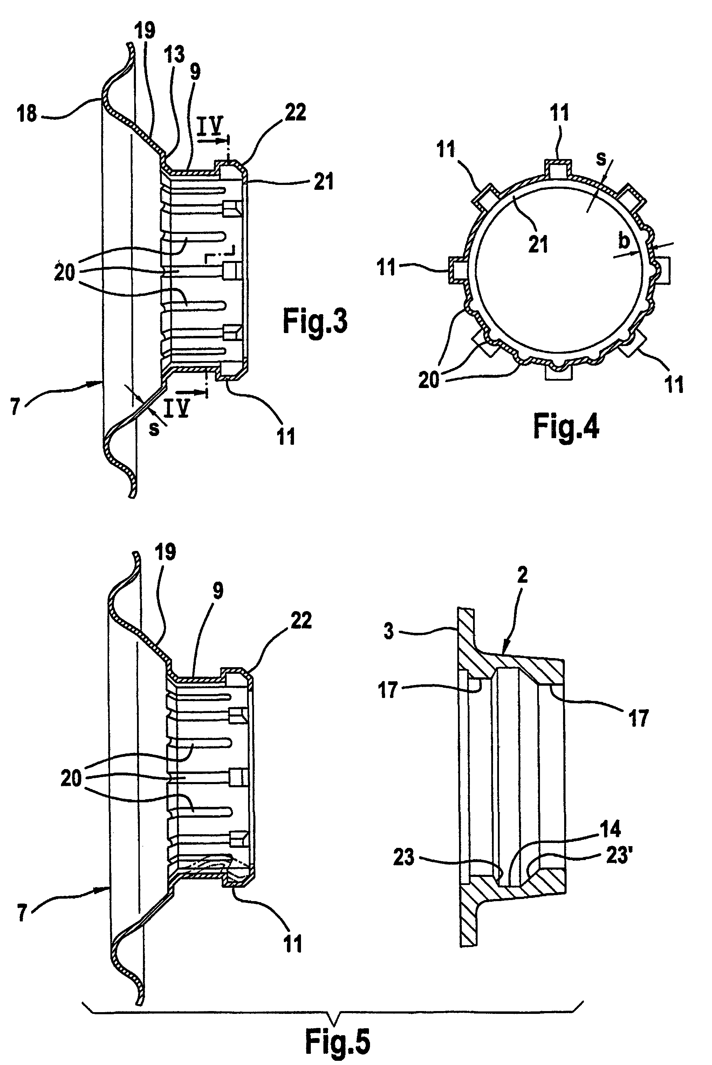

Um eine radiale Nachgiebigkeit des Haltestutzens zu begünstigen, weist er an seinem freien Stirnende keinen geschlossenen Boden auf. Wegen eines in die Zentrierbohrung hineinragenden Radnabenlagers wäre ein solcher Boden auch hinderlich. Vielmehr ist an der freien Stirnseite des zylindrische Haltestutzens 9 lediglich ein schmaler, radial nach innen ragenden Versteifungsflansch 21 vorgesehen, der radial einen gewissen Widerstand und eine Aussteifungswirkung bietet. Seine radiale Breite b entspricht etwa dem 8- bis 12-fachen der Wandstärke s des Folienformkörpers 7, was allerdings bei der übertrieben groß gezeichneten Wandstärke nicht maßstäblich darstellbar ist. Zwar wird durch den Versteifungsflansch, dessen Axiallage etwa mit der des innenseitigen Endes der Rastnasen übereinstimmt, der Haltestutzen an dessen Axialposition radial ausgesteift, was durchaus beabsichtigt ist. Jedoch ist der Haltestutzen in dem axial weiter zur Radaußenseite hin gelegenen Bereich radial weicher. Um den Übergang von dem radial relativ stabilen Endbereich des Haltestutzens zu dem axial zur Basis des Haltestutzens zu gelegenen Bereichen abzustufen, sind die axial verlaufenden Rillen 20 auf denjenigen axialen Bereich des Haltestutzens beschränkt, der axial zwischen den Rastnasen 11 und der Basis des Haltestutzens liegt. Aufgrund dieser unterschiedlichen radialen Härten des Haltezapfens können die Rastnasen beim Einstecken oder Harausziehen des Haltezapfens in die bzw. aus der Zentrierbohrung schwenkend radial nach innen wegtauchen, wobei ein scheinbares Schwenkzentrum in der Nähe des Versteifungsflansches liegt. Diese Schwenkstellung einer Rastnase ist in Figur 5 strichpunktiert angedeutet.

Um das axiale Einführen des Haltestutzens 9 in die Zentrierbohrung 17 zu erleichtern, sind die Rastnasen 11 zumindest auf der in Einsteckrichtung vorauslaufenden Seite mit einer Anschrägung 22 versehen. Beim Einsetzen des Haltestutzens in die Zentrierbohrung wird seitens deren Rand über die Schrägen 22 ein axialer Druck auf die Rastnasen ausgeübt, der das oben erwähnte schwenkende Nachgeben der Rastnasen nach innen begünstigt. Die radseitige Umfangsrille 14 der Zentrierbohrung ist im Querschnitt trapezförmig mit geneigten Seitenflanken 23, 23' ausgebildet. Die geneigte außenseitige Seitenflanke 23 der Umfangsrile erleichtert ein beschädigungsfreies Abziehen des Haltestutzens aus der Zentrierbohrung. Beim Abziehen können die Rastnasen an der Flankenneigung radial nach innen aufgleiten, wobei sie in der oben geschilderten Weise radial nach innen wegschwenken.

Der Folienformkörper 7 ist in dem die Felgenaußenseite 3 überdeckenden Schirmteil 24 stark nachgiebig gestaltet, so daß der Schirmteil bedarfsweise von der Radaußenseite abgehoben werden kann. Ein solcher Bedarf kann sich beispielsweise beim Kontrollieren und ggf. Erhöhen des Reifenluftdruckes oder beim endgültigen Abnehmen der Radabdeckung ergeben. Aufgrund der elastischen Nachgibigkeit des Schirmteiles 24 kann dieser örtlich angehoben und der Haltestutzen unterhalb des Schirmteils manuell oder auch mit einem gabelähnlichen Abziehwerkzeug erreicht werden. Danach kann der Haltestutzen axial aus der Zentrierbohrung vorsichtig und beschädigungsfrei herausgezogen werden.

Aus der stark nachgiebig Ausgestaltung des Folienformkörpers 7 er gibt sich ferner noch der Vorteil, daß bei unterschiedlichen Felgen mit jeweils unterschiedlicher Einpresstiefe, also einer in Axialrichtung der Nabe unterschiedlich tiefen Verrasstung, der gleiche Folienformkörper 7 verwendet werden kann. Dies ist daher möglich, da die Relativlage zwischen dem Rand des Schirmteils 24 und den Rastnasen 11 des Haltestutzens 9 in weiten Grenzen verändert werden kann. Trotz dieser sehr großen Variationsmöglichkeiten ist immer eine elastische Verspannung des Schirmteils 24 gewährleistet, wodurch eine sichere Halterung des Folienformkörpers 7 an der Felge realisiert ist.

Um dem Schirmteil 24 des Folienformkörpers eine hohe elastische Nachgiebigkeit zu geben, ist dieser im Querschnitt wellenförmig ausgebildet und weist mehrere wellenförmig aneinander anschließende Umfangswülste 18 und Umfangsrillen 18' auf. Die Wandung des Schirmteiles bildet im radialen Querschnitt einen sinusähnlichen Wellenzug aus benachbarten Umfangswülsten 18 und Umfangsrillen 18'. Die Mittellinie 25 dieses Wellenzuges ist ihrerseits ebenfalls bogenförmig axial nach außen gewölbt. Der radial innerste Umfangswulst des Schirmteils 24 geht über einen Kegelstumpf 19 in den zylindrischen Haltestutzen 9 über. Hierbei ist zwischen dem Kegelstumpf und dem Haltestutzen ein schmaler achssenkrechter Bund 13 angeordnet. Durch die Umfangswülste und Umfangsrillen ist im Schirmteil 24 ein im Querschnitt zumindest angenähert gleichmäßiger Wellenzug ausgebildet. Die gemeinsame radiale Breite B benachbarter Umfangswülste und Umfangsrillen in diesem Wellenzug beträgt etwa 5 bis 10 % des Durchmessers des Folienformkörpers 7 und die gemeinsame Höhe H entspricht etwa 25 bis 40 %, vorzugsweise etwa 30 % der genannten gemeinsamen radialen Breite B.

Es empfiehlt sich, den Folienformkörper 7 aus einer Hartfolie aus thermoplastischem Kunststoff, z.B. auch aus einem Recyclat-Kunststoff herzustellen. Erste Exemplare des Folienformkörpers der Anmelderin wurden aus Polyethylenterephthalat (PET) hergestellt. Auch Polypropylenfolien (PP) oder Polystyrol (PS) können erfolgversprechend eingesetzt werden. Die Wandstärke s des Folienformkörpers beträgt etwa 0,5 mm, womit er eine gewisse Eigenstabilität besitzt. Diese Wandstärke ist in den Zeichnungen übertrieben groß dargestellt.

Zum Herstellen des Folienformkörpers wird die bekannte und verbreitete Technik des Folientiefziehens eingesetzt, bei der ein Zuschnitt eines flachen Folienmaterials zum Handhaben randseitig in einen Rahmen oder endlos umlaufende Nadelketten eingespannt bzw. aufgenadelt, durch Strahlungserwärmung auf Umformtemperatur erwärmt, auf ein luftdurchlässiges Formgebungswerkzeug aufgelegt wird und die zwischen Werkzeugoberfläche und erweichter Folie verbleibenden Zwickelräume evakuiert werden, so daß sich die Folie konturtreu an die formgebende Werkzeugoberfläche anschmiegt. In diesem Zustand wird unter Aufrechterhaltung des Vakuums der geformte Werkstück-Rohling abgekühlt und kann danach entformt und aus der Randeinspannung gelöst werden. Anschließend muß noch der Außenrand beschnitten und der Boden des Haltestutzens entlang des Innenrandes des Versteifungsflansches 21 ausgestanzt werden und der Folienformkörper ist fertig. Zum Abformen der Hinterschneidungen im Bereich der Rastnasen 11 ist ein Werkzeug mit Schiebern erforderlich, die ein problemloses Entformen des Rohlings des Folienformkörpers aus dem Formwerkzeug erlauben. Als Folienmaterial können bestimmte Zuschnitte verwendet werden. Ersatzweise kann auch Folienmaterial verwendet werden, das - ohne vorherigen Zuschnitt - direkt von einer Rolle abgewickelt wird.

Durch den Folienformkörper wird nicht nur die Bremsscheibe gegen Korrosion, sondern selbstverständlich auch die Leichtmetallfelge selber gegen Transprortanschmutzungen geschützt. Es ist hierbei daran zu denken, daß das Fahrzeug u.U. per Bahn und/oder per Straßenfahrzeug über große Entfernungen frei auf dem Transportfahrzeug stehend befördert wird und während dieser Fahrt sich Straßenstaub, Flugnässe u.dgl. an das Fahrzeug anlagern. Aufgrund der Radabdeckung kommt die Leichtmetallfelge jedoch auch nach einem längeren Transport unter ungünstigen Witterungsbedingungen sauber unter der Abdeckung hervor.

## Patentansprüche

1. Abdeckung von Fahrzeugrädern (1) mit Leichtmetallfelgen (2) während eines längeren Transportes, bei der die nach außen weisende Seite der Fahrzeugräder mit einem runden, geschlossenen, eigensteifen Folienformkörper (7) überdeckt ist, der die Außenseite (3) der Leichtmetallfelge (2) bis über das Felgenhorn (8) flächendeckend übergreift und der zentrisch am Fahrzeugrad (1) in Aussparungen desselben mittels in den Folienformkörper (7) eingeformter, den radseitigen Aussparungen formnegativ entsprechenden Erhebungen befestigt ist, wobei der Folienformkörper (7) in seinem Zentrum einen sich axial zum Fahrzeugrad hin erstreckenden, im Durchmesser einer Zentrierbohrung (17) der Felge entsprechenden zylindrischen Haltestutzen (9) aufweist, der in die Zentrierbohrung (17) des Fahrzeugrades (1) unter Vorspannung hineinragt, wobei der Haltestutzen (9) an seinem Umfang eine sich in Umfangsrichtung erstrekkende Reihe von Rastnasen (11) aufweist, welche Rastnasen (11) einen Formschluß mit der Felgennabe bilden, **gekennzeichnet durch** die Gemeinsamkeit folgender Merkmale:
a) die Rastnasen (11) am Umfang des zylindrischen Haltestutzens (9) des Folienformkörpers (7) entsprechen nach Axiallage und Querschnittsform einer in der Leibung der Zentrierbohrung (17) angebrachten, an sich bekannten Umfangsrille (14) oder halten sich zumindest innerhalb des Lichtraumprofils der Umfangsrille und rasten in diese ein,
b) der zylindrische Haltestutzen (9) des Folienformkörpers (7) trägt an seinem Umfang mehrere axial verlaufende Rillen (20), die auf den axialen Bereich des Haltestutzens (9) beschränkt sind, der axial zwischen den Rastnasen (11) und der Basis des Haltestutzens (9) liegt,
c) der zylindrische Haltestutzen (9) des Folienformkörpers (7) trägt an seiner freien Stirnseite lediglich einen radial nach innen ragenden Versteifungsflansch (21), dessen radiale Breite (b) etwa dem 8- bis 12-fachen der Wandstärke (s) des Folienformkörpers (7) entspricht,
d) der Folienformkörper (7) ist in dem die Felgenaußenseite (3) überdeckenden Schirmteil (24) im Querschnitt wellenförmig ausgebildet und weist mehrere wellenförmig aneinander anschließende Umfangswülste (18) und Umfangsrillen (18') auf, wobei die Mittellinie (25) der wellenförmig aneinander anschließenden Umfangswülste (18) und Umfangsrillen (18') in dem die Felgenaußenseite überdeckenden Schirmteil (24) des Folienformkörpers (7) selber ebenfalls bogenförmig axial nach außen gewölbt ist,
e) der radial innerste Umfangswulst des Schirmteils (24) geht über einen Kegelstumpf (19) in den zylindrischen Haltestutzen (9) über, wobei zwischen Kegelstumpf (19) und Haltestutzen (9) ein schmaler achssenkrechter Bund (13) angeordnet ist.

2. Abdeckung nach Anspruch 1,
**dadurch gekennzeichnet, daß**
die Rastnasen (11) zumindest auf der in Einsteckrichtung vorauslaufenden Seite angeschrägt (22) sind.

3. Abdeckung nach Anspruch 1,
**dadurch gekennzeichnet, daß**
die Umfangswülste (18) und Umfangsrillen (18') im Schirmteil (24) des Folienformkörpers (7) annähernd gleichmäßig ausgebildet sind und gemeinsam einen im Querschnitt zumindest angenähert gleichmäßigen Wellenzug bilden.

4. Abdeckung nach Anspruch 1,
**dadurch gekennzeichnet, daß**
der durch die Umfangswülste (18) und Umfangsrillen (18') gemeinsam im Querschnitt gebildete Wellenzug eine gemeinsame radiale Breite (B) benachbarter Umfangswülste (18) und Umfangsrillen (18') von etwa 5 bis 10 % des Durchmessers des Folienformkörpers (7) aufweist.

5. Abdeckung nach Anspruch 1,
**dadurch gekennzeichnet, daß**
der durch die Umfangswülste (18) und Umfangsrillen (18') gemeinsam im Querschnitt gebildete Wellenzug eine gemeinsame Höhe (H) benachbarter Umfangswülste (18) und Umfangsrillen (18') von 25 bis 40 %, vorzugsweise etwa 30 % der gemeinsamen radialen Breite (B) benachbarter Umfangswülste (18) und Umfangsrillen (18') aufweist.

## Claims

1. Cover for vehicle wheels (1) with light alloy rims (2) during a rather long haulage wherein the side of the vehicle wheels facing outwards is covered with a round, closed, intrinsically rigid film form body (7) which extends over the outer side (3) of the light alloy rim (2) as far as covering the rim horn (8) and which is fixed centrically on the vehicle wheel (1) in recesses of the same by means of raised areas formed in the film form body (7) and corresponding in a form-negative way to the recesses on the wheel side, wherein the film form body (7) has in its centre a cylindrical support (9) extending axially to the vehicle wheel and corresponding in diameter to a centre bore (17) of the rim, wherein this support (9) projects in a compressed way into the centre bore (17) of the vehicle wheel (1) and wherein the support (9) has on its perimeter a row of catches (11) extending in the peripheral direction which lock positively with the rim hub,
**characterised by** bringing together the following features:
a) the catches (11) on the perimeter of the cylindrical support (9) of the film form body (7) correspond in axial position and cross-sectional form to a peripheral groove (14) which is known in itself and is arranged in the reveal of the centre bore (17) or support themselves at least within the light area profile of the peripheral groove and engage in the same,
b) the cylindrical support (9) of the film form body (7) has on its perimeter several axially running grooves (20) which are limited to the axial area of the support (9) which lies between the catches (11) and the base of the support (9),
c) the cylindrical support (9) of the film form body (7) has on its free front side merely a radially inwardly projecting stiffening flange (21), of which the radial width (b) corresponds approximately to 8 to 12 times the wall thickness (s) of the film form body (7),
d) the film form body (7) is designed in cross-section in waveform in the screen part (24) covering the rim outer side (3) and has several peripheral beads (18) and peripheral grooves (18') connecting to each other in waveform, wherein the centre line (25) of the peripheral beads (18) and peripheral grooves (18') connecting in waveform to each other is itself likewise axially curved in arc form outwards in the screen part (24) of the film form body (7) covering the rim outer side,
e) the radially most inner peripheral bead of the screen part (24) goes via a truncated cone (19) into the cylindrical support (9), wherein a narrow axial-perpendicular collar (13) is arranged between the truncated cone (19) and the support (9).

2. Cover according to claim 1
**characterised in that**
the catches (11) are chamfered at least on the prerunning side in the insertion direction.

3. Cover according to claim 1
**characterised in that**
the peripheral beads (18) and peripheral grooves (18') are formed virtually regularly in the screen part (24) of the film form body (7) and together form a wave train which is at least virtually regular in cross-section.

4. Cover according to claim 1
**characterised in that**
the wave train formed in common cross-section through the peripheral beads (18) and peripheral grooves (18') has a common radial width (B) of neighbouring peripheral beads (18) and peripheral grooves (18') of around 5 to 10% of the diameter of the film form body (7).

5. Cover according to claim 1
**characterised in that**
the wave train formed in common cross-section through the peripheral beads (18) and peripheral grooves (18') has a common height (H) of neighbouring peripheral beads (18) and peripheral grooves (18') of 25 to 40%, preferably approximately 30% of the common radial width (B) of neighbouring peripheral beads (18) and peripheral grooves (18').

## Revendications

1. Dispositif de recouvrement de roue (1) de véhicule comportant des jantes en métal léger (2) pendant un transport d'assez longue durée, dans lequel le côté, tourné vers l'extérieur, des roues du véhicule est recouvert par un corps moulé (7) formé d'une feuille circulaire fermée et possédant une rigidité propre, qui s'engage autour du côté extérieur (3) de la jante en métal léger (2) jusqu'au-dessus du rebord de jante (8) en réalisant un recouvrement superficiel et qui est fixé d'une manière centrée sur la roue (1) dans des évidements de cette roue, à l'aide de bossages formés sur le corps moulé formé d'une feuille (7) et correspondant avec une forme négative aux évidements situés dans la roue, le corps moulé formé d'une feuille (7) possédant en son centre une tubulure de retenue cylindrique (9) qui s'étend axialement en direction de la roue du véhicule et possédant un diamètre correspondant au diamètre d'un perçage de centrage (17) de la jante, et qui pénètre sous précontrainte dans le perçage de centrage (17) de la roue (1) du véhicule, l'embout de retenue (9) possédant sur sa périphérie une rangée de becs d'encliquetage (11), qui s'étend dans la direction circonférentielle, lesquels becs d'encliquetage (11) établissent une liaison de forme avec le moyeu de la jante,
**caractérisé par** la combinaison de caractéristiques suivantes:
a) que les becs d'encliquetage (11) sur la périphérie de l'embout cylindrique de retenue (9) du corps moulé formé d'une feuille (7) correspondent, du point de vue de la position axiale et de la forme en coupe transversale, à une rainure circonférentielle connue en soi (14), qui est aménagée dans l'intrados du perçage central (17), ou sont retenus au moins à l'intérieur du profil d'espace libre de la rainure circonférentielle et s'encliquette dans cette dernière,
b) l'embout cylindrique de retenue (9) du corps moulé formé d'une feuille (7) porte, sur sa périphérie, plusieurs rainures axiales (20), qui sont limitées à la partie axiale de l'embout de retenue (9), qui est situé axialement entre les becs d'encliquetage (11) et dans la base de l'embout de retenue (9),
c) l'embout de retenue cylindrique (9) du corps moulé formé d'une feuille (7) porte, sur son côté frontal libre, uniquement une bride de renfort (21), qui pénètre radialement vers l'intérieur et dont la largeur radiale (b) est comprise approximativement entre 8 et 12 fois l'épaisseur de paroi (s) du corps moulé formé d'une feuille (7),
d) le corps moulé formé d'une feuille (7) est agencé avec une forme ondulée en coupe transversale, dans la partie de protection (24) qui recouvre le côté extérieur (3) de la jante et comporte plusieurs rebords circonférentiels (18) et rainures circonférentielles (18') qui se raccordent entre eux avec une forme ondulée, les lignes médianes (25) des rebords circonférentiels (18) et des rainures circonférentielles, qui se raccordent entre eux avec une forme ondulée étant également cintrés axialement vers l'extérieur en forme d'arc de cercle dans la partie de protection (24), qui recouvre la face extérieure de la jante, du corps moulé formé d'une feuille (7) lui-même,
e) le rebord circonférentiel, le plus intérieur du point de vue radial, de la partie de protection (24) se prolonge par l'intermédiaire d'un tronc de cône (19) par l'embout cylindrique de retenue (9), auquel cas un petit collet (13) perpendiculaire à l'axe est disposé entre le trou de cône (19) et l'embout de retenue (9).

2. Dispositif de recouvrement selon la revendication 1, **caractérisé en ce que** les becs d'encliquetage (11) sont biseautés au moins sur le côté qui sont en avant dans la direction d'enfichage.

3. Dispositif de recouvrement selon la revendication 1, **caractérisé en ce que** les rebords circonférentiels (18) et les rainures périphériques (18') dans la partie de protection (24) du corps moulé formé d'une feuille (7) sont agencés approximativement d'une manière uniforme et forment en commun un train d'ondulations au moins approximativement uniforme en coupe transversale.

4. Dispositif de recouvrement selon la revendication 1, **caractérisé en ce que** le train d'ondulations formé en commun en coupe transversale par les rebords périphériques (18) des rainures périphériques (18') comporte des rebords périphériques (18) et des rainures périphériques (18'), qui sont voisins, possède une large radiale commune (B) comprise entre environ 5 et 10 % du diamètre du corps moulé formé d'une feuille (7).

5. Dispositif de recouvrement selon la revendication 1, **caractérisé en ce que** dans le train d'ondulations formé en commun en coupe transversale, les rebords périphériques (18) et les rainures périphériques (18'), qui sont voisins, possèdent une hauteur commune (H) comprise entre 25 et 40 % et de préférence égale à environ 30 % de la largeur radiale commune (B) de rebords périphériques (18) et de rainures périphériques (18'), qui sont voisins.
